**Europäisches Patentamt**

**European Patent Office**

**Office européen des brevets**

(19)

(11) Numéro de publication: **0175093 B1**

# (12) FASCICULE DE BREVET EUROPEEN

(45) Date de publication du fascicule du brevet:
**07.01.88**

(21) Numéro de dépôt: **85109241.1**

(22) Date de dépôt: **23.07.85**

(51) Int. Cl.⁴: **C 21 D 9/08,** C 21 D 9/00, F 27 D 3/00

(54) **Installation de manutention pour objets cylindriques longs, notamment pour tuyaux.**

(30) Priorité: **10.09.84 FR 8413860**

(43) Date de publication de la demande:
**26.03.86 Bulletin 86/13**

(45) Mention de la délivrance du brevet:
**07.01.88 Bulletin 88/1**

(84) Etats contractants désignés:
**DE GB IT**

(56) Documents cités:
**DE - C - 721 548**
**FR - A - 645 310**
**FR - A - 1 121 685**

(73) Titulaire: **PONT-A-MOUSSON S.A., 91, Avenue de la Libération, F-54017 Nancy (FR)**

(72) Inventeur: **Genesio, René, 8, allée Beethoven Pré Latour, F-54700 Pont-a-Mousson (FR)**
Inventeur: **Martinez, Jean-Pierre, 41, avenue de Champagne, F-54700 Pont-a-Mousson (FR)**
Inventeur: **Schmitt, Romain, 705, rue Gaston Petit, F-54700 Pont-a-Mousson (FR)**

(74) Mandataire: **Puit, Thierry et al, c/o Centre de Recherches de Pont-à-Mousson B.P. 28, F-54703 Pont-à-Mousson Cedex (FR)**

ACTORUM AG

## Description

La présente invention a trait à la manutention d'objets cylindriques longs, notamment de tuyaux.

Elle trouve particulièrement son application dans les fours du type dans lesquels on fait circuler, par roulement, des tuyaux en fonte par exemple, suivant une direction perpendiculaire à leur axe de rotation, pour leur faire subir un réchauffage ou tout autre traitement thermique.

Outre les moyens de chauffage habituels, un four de ce type comporte une sole dotée de chemins de roulement ou de rails, généralement parallèles entre eux et à l'axe longitudinal du four, et sur lesquels roulent les tuyaux, sous l'action de moyens convoyeurs, depuis l'amont du four jusqu'à l'aval de ce dernier.

Les tuyaux sont entraînés depuis l'amont du four jusqu'à l'aval de ce dernier, par exemple par des chaînes parallèles aux rails et pourvues de dents, lesdites dents faisant saillies par rapport au plan de roulement des rails, pour venir prendre tangentiellement appui contre la paroi extérieure des tuyaux. Un tel four peut comporter deux chaînes parallèles disposées respectivement en dessous de chacune des extrémités des tuyaux.

Sur le plan longitudinal du four, l'espace entre chaque dent est adapté pour accueillir, entre chacune d'elles, des tuyaux dans une très large gamme diamétrale.

Sur le plan transversal du four, les dents portées par les chaînes sont alignées suivant une ligne perpendiculaire au chemin de circulation des tuyaux.

Le mouvement de chacune des chaînes, qui sont entraînées par des moyens du type connu, est synchronisé afin que les tuyaux roulent transversalement sur les rails avec leur axe de rotation orthogonal à l'axe longitudinal du four.

Tout glissement axial intempestif des tuyaux en direction de l'une ou l'autre des parois latérales du four est corrigé séquentiellement par des butées mobiles disposées de part et d'autre des parois latérales de celui-ci et agissant en synchronisme sur les extrémités des tuyaux suivant leur axe longitudinal.

Les butées mobiles sont actionnées par des moyens de commande, tels que des vérins linéaires, disposés à l'extérieur du four, perpendiculairement aux parois extérieures de celui-ci. Les butées ainsi configurées permettent de maintenir les tuyaux au centre du four et interdisent ainsi tout frottement et accrochage indésirable des extrémités des tuyaux sur les parois internes du four.

De tels dispositifs de positionnement présentent cependant l'inconvénient d'être encombrants et de gêner les accès autour du four.

De plus, le repositionnement longitudinal des tuyaux, par glissement, suivant le mode décrit précédemment, provoque par abraison, dans l'alignement de chacune des butées mobiles, une usure du sommet de rails, ce qui implique un remplacement périodique et fréquent de ces derniers avec les inconvénients matériels et financiers que cela entraîne.

Compte tenu des inconvénients précités, l'invention a pour but, d'une part, de résoudre le problème consistant à diminuer, à l'extérieur des parois latérales du four, l'emprise des butées et de leurs moyens de commande sur les voies d'accès jouxtant ce dernier, et, d'autre part, d'éviter toute usure transversale des rails lors du repositionnement des tuyaux, en réduisant ainsi les frais inhérents au remplacement périodique des rails usés, opération relativement onéreuse en raison du coût de la matière première constituant ces derniers (acier réfractaire), de la main d'oeuvre et des délais d'immobilisation du four.

Selon une première disposition de l'invention, l'installation comporte au moins deux chemins de roulement (ou rails) sur lesquels les objets cylindriques longs (tuyaux) roulent sous l'action de moyens convoyeurs, et au moins un dispositif de positionnement comportant deux butées mobiles disposées l'une en face de l'autre de part et d'autre des deux chemins de roulement et pouvant occuper, sous l'action de moyens de commande, soit une position active pour laquelle les deux butées coopèrent respectivement avec les deux extrémités des susdits objets passant à leur niveau pour les positionner transversalement, soit une position effacée pour laquelle les deux butées sont écartées de leur position active, et elle est caractérisée par le fait que chacune des deux butées est portée respectivement par deux bras coudés symétriques articulés chacun autour d'un axe parallèle à la direction de roulement des objets et disposé en dessous du plan des deux chemins de roulement, les moyens de commande coopérant avec chacun des susdits bras étant également disposés en dessous du plan des deux chemins de roulement.

Grâce à cette disposition, les accès de l'installation au niveau des objets se trouvent dégagés.

Selon un mode de réalisation avantageux de cette disposition, des moyens de rappel coopèrent avec chaque bras pour ramener automatiquement le bras dans une position correspondant à la position effacée de la butée, en cas de non-alimentation en énergie des moyens de commande.

Selon une autre disposition de l'invention, indépendante de la précédente mais qui, le cas échéant, peut avantageusement être appliquée en combinaison, l'installation comporte au moins deux chemins de roulement (ou rails) sur lesquels les objets cylindriques longs (tuyaux) roulent sous l'action de moyens convoyeurs, et au moins un dispositif de positionnement comportant deux butées mobiles disposées l'une en face de l'autre de part et d'autre des deux chemins de roulement et pouvant occuper, sous l'action de moyens de commande, soit une position active pour laquellel les deux butées coopèrent respectivement avec les deux extrémités des susdits objets passant à leur niveau pour les positionner transversalement, soit une position effacée pour laquelle les deux butées sont écartées de leur position active, et elle est caractérisée par le fait qu'il est prévu, au voisinage des deux chemins de roulement et au niveau des deux butées mobiles, au moins deux patins de glissement surélevés par rapport au plan des deux chemins de roulement et sur lesquels les objets se trouvent positionnés lorsqu'ils passent au niveau des deux butées et que lesdits butées viennent coopérer respectivement avec leurs deux extrémités pour procéder à leur positionnement transversal.

Grâce à cette disposition, si le positionnement transversal provoque un déplacement transversal de l'objet par rapport aux chemins de roulement, ceux-ci ne se trouvent pas usés par ce déplacement puisque l'objet est alors supporté par les patins de glissement.

L'invention consiste, mises à part les dispositions dont il vient d'être question, en certaines autres dispositions qui s'utilisent de préférence en même temps et dont il sera plus explicitement parlé ci-après.

L'invention pourra, de toute façon, être bien comprise à l'aide du complément de description qui suit, ainsi que des dessins ci-annexés, lesquels complément et dessins sont relatifs à un mode de réalisation préféré de l'invention et ne comportent, bien entendu, aucun caractère limitatif.

La fig. 1, de ces dessins, est une coupe transversale d'une installation établie conformément à un mode de réalisation préféré de l'invention.

La fig. 2 est une vue agrandie, en coupe transversale, d'une installation établie suivant une disposition particulière de l'invention.

La fig. 3 est une coupe partielle selon III-III fig. 2.

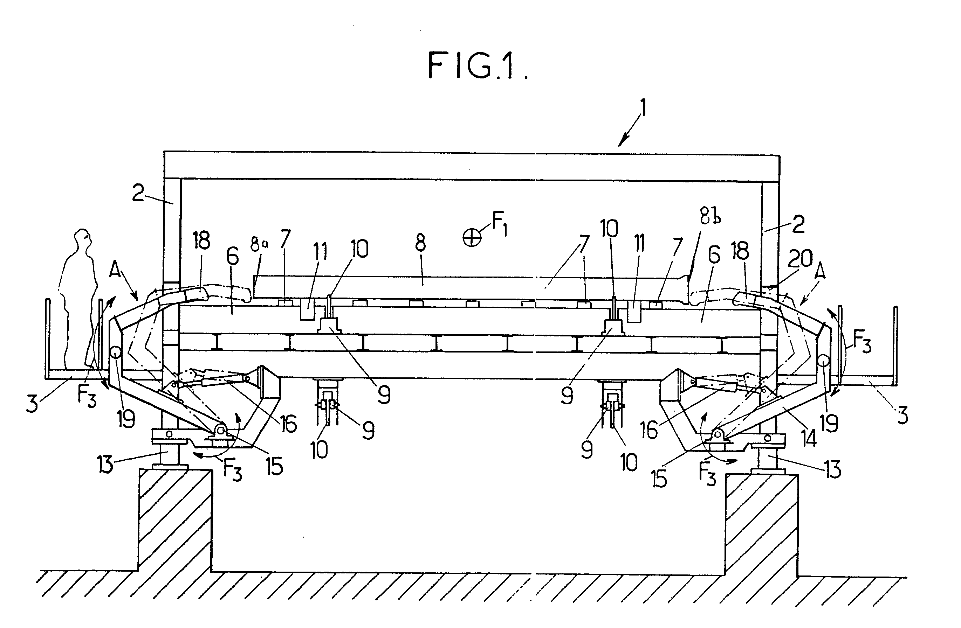

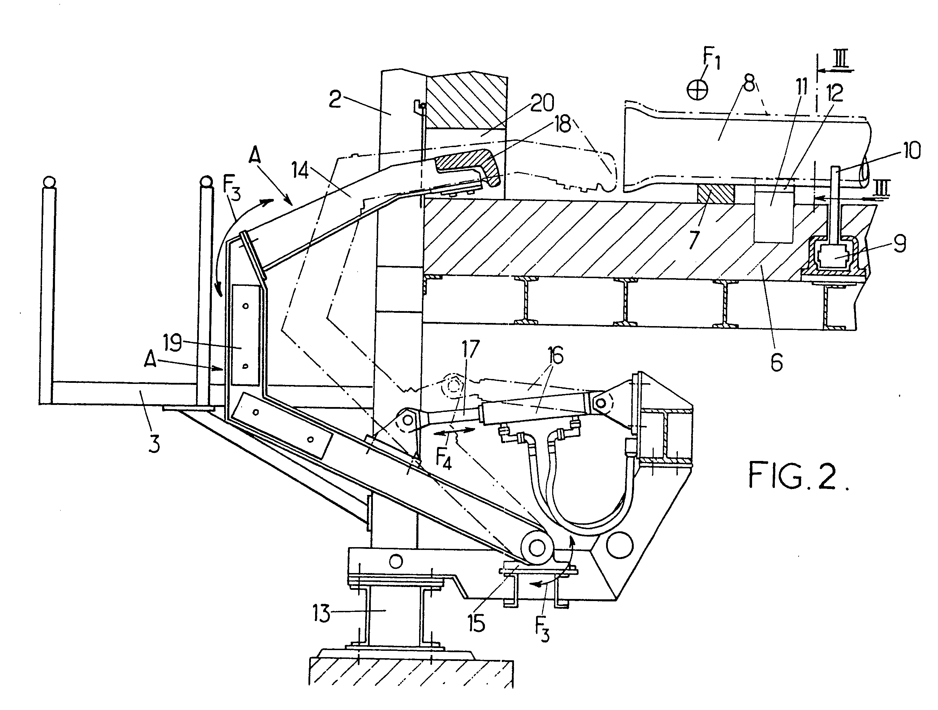

Sur les figures 1 et 2, on a montré, en coupe transversale, un four de traitement thermique 1 dans lequel on fait circuler suivant le sens de la flèche F1, par roulement, des objets cylindriques longs, par exemple des tuyaux en fonte 8.

Ces tuyaux 8 circulent suivant la flèche F1 dans une direction perpendiculaire à leur axe de rotation et ils peuvent subir, dans le four 1, un traitement thermique tel qu'un réchauffage.

Ce four 1 comporte donc des moyens de manutention, notamment pour assurer le déplacement et le positionnement des tuyaux 8.

De plus, ce four 1 comporte des moyens de chauffage, non représentés, et une sole 6 munie de chemins de roulement ou rails 7 parallèles entre eux et à l'axe longitudinal du four et sur lesquels roulent le tuyau 8 sous l'action de moyens convoyeurs 9, 10, depuis l'amont du four 1 jusqu'à l'aval de ce dernier.

Les tuyaux sont entraînés par des chaînes 9 parallèles aus rails 7 et pourvues de dents 10, lesdites dents faisant saillie par rapport au plan de roulement des rails 7, pour venir prendre tangentiellement appui contre la paroi extérieure des tuyaux 8. Un tel four peut comporter deux chaînes 9 parallèles et disposées respectivement en dessous de chacune des deux extrémités 8a, 8b des tuyaux 8.

Sur le plan longitudinal du four 1, l'espace entre chaque dent 10 est adapté pour accueillir, entre chacune d'elles, des tuyaux dans une très large gamme diamétrale.

Sur le plan transversal du four 1, les dents 10 portées par les chaînes 9 sont alignées suivant une ligne perpendiculaire au sens de circulation des tuyaux 8.

Le mouvement de chacune des deux chaînes 9, qui sont entraînées par des moyens non représentés, est synchronisé afin que les tuyaux 8 roulent transversalement sur les rails 7 avec leur axe de rotation orthogonal à l'axe longitudinal du four.

Pour corriger séquentiellement tout glissement transversal des tuyaux 8 en direction de l'une ou l'autre des parois latérales 2 du four 1, il est prévu une pluralité de dispositifs de positionnement A, régulièrement espacés le long du four 1, et comportant chacun deux butées mobiles 18 disposées l'une en face de l'autre de part et d'autre des rails 7 et pouvant occuper, sous l'action de moyens de commande 16,

— soit une position active pour laquelle les deux butées 18 coopèrent respectivement avec les deux extrémités 8a, 8b des tubes 8 passant à leur niveau pour les positionner transversalement,

— soit une position effacée pour laquelle les deux butées 18 sont écartées de leur position active.

Chacune de ces deux butées 18 est portée respectivement par deux bras coudés symétriques 14 articulés chacun autour d'un axe 15 parallèle à la direction de roulement F1 des tuyaux 8 et disposé en dessous du plan des rails 7, les moyens de commande 16 coopérant avec chacun des susdits bras 14 étant également disposés en dessous du plan des rails 7. Le mouvement circulaire de ces deux bras 14 se fait suivant la flèche F3.

Selon un mode de réalisation avantageux des moyens de rappel 19, qui peuvent être constitués par un contrepoids excentré par rapport à l'axe 15, coopèrent avec chaque bras 14 pour ramener automatiquement le bras 14 dans une position correspondant à la position effacée de la butée 18 en cas de non-alimentation en énergie des moyens de commande 16.

Ces moyens de commande 16 peuvent être constitués par un vérin hydraulique à double effet interposé entre un support fixe 13 et le bras 14, la tige 17 dudit vérin se déplaçant suivant la flèche F4.

Les moyens de rappel 19 agissent lorsque les deux chambres du vérin sont mises simultanément en communication entre elles et avec des circuits de décharge vers la bâche d'alimentation grâce à des dispositifs de détection de pression ou d'arrêt de centrale hydraulique (dispositifs non représentés).

Par ailleurs, il est prévu, au voisinage des rails 7 et au niveau des deux butées mobiles 18, des patins de glissement 11, surélevés par rapport au plan des deux rails 7 et sur lesquels les tuyaux 8 se trouvent positionnés lorsqu'ils passent au niveau des deux butées 18 et que lesdites butées 18 viennent coopérer respectivement avec leurs deux extrémités 8a, 8b pour procéder à leur positionnement transversal.

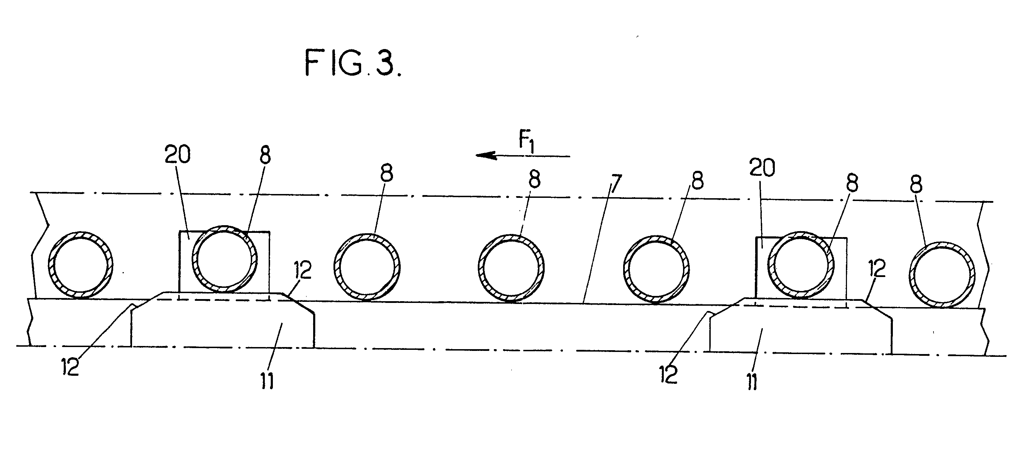

Comme montré sur la fig. 3, sur laquelle les mêmes chiffres de référence désignent les mêmes organes que sur la fig. 2, chaque patin de glissement 11 peut comporter deux rampes d'accès 12 (l'une à l'avant, l'autre à l'arrière) pour faciliter la montée du tuyau 8 sur le patin de glissement 11 et sa descente dudit patin de glissement 11.

Sur cette fig. 3, on voit clairement qu'un tuyau 8 cheminant sur les rails 7 est amené au niveau de la rampe avant 12 des patins de glissement 11, puis chemine sur cette rampe 12, arrive sur les patins de glissement 11, y est repositionné transversalement, et quitte les patins de glissement 11 par leur rampe arrière 12 pour se retrouver sur les rails 7.

Finalement, l'installation de manutention, conforme à l'invention, présente un certain nombre d'avantages parmi lesquels on peut citer ceux résumés par les points suivants:

— les accès autour du four 1 se trouvent dégagés, notamment au niveau des parois latérales 2 dudit four, des ouvertures 20 ménagées dans ces parois latérales et de la voie d'accès 3 qui est généralement prévue autour du four et, ce, grâce à la géométrie des bras coudés symétriques portant les butées et à la disposition de leurs moyens de commande;

— en cas de non-alimentation accidentelle en énergie de ces moyens de commande, il se produit un auto-escamotage des bras coudés symétriques et des butées qu'ils portent, ce qui permet d'éviter, ainsi, tout accrochage intempestif des tuyaux si cette non-alimentation accidentelle survient lorsque les butées sont en position active;

— l'usure transversale sur le sommet des rails est évitée en raison de la substitution des patins de glissement aux rails lors des manoeuvres de repositionnement transversal des tuyaux; les patins de glissement sont de très faibles longueurs, faciles à remplacer et coûtent peu cher par rapport aux rails qui sont en acier réfractaire;

— le champ de vision qu'un observateur, se trouvant sur les voies d'accès 3 peut avoir sur les butées mobiles 18 lorsque celle-ci sont en action sur les extrémités 8a, 8b des tuyaux 8, facilite les réglages initiaux du dispositif de positionnement et le contrôle de son bon fonctionnement.

**Revendications**

1. Installation de manutention pour objets cylindriques longs (8), tels que des tuyaux, comportant au moins deux chemins de roulement (7) sur lesquels lesdits objets (8) roulent sous l'action de moyens convoyeurs (9, 10), et au moins un dispositif de positionnement (A) comportant deux butées mobiles (18) disposées l'une en face de l'autre de part et d'autre des deux chemins de roulement (7) et pouvant occuper, sous l'action de moyens de commande (16), soit une position active pour laquelle les deux butées (18) coopèrent respectivement avec les deux extrémités (8a, 8b) des objets (8) passant à leur niveau pour les positionner transversalement, soit une position effacée pour laquelle les deux butées (18) sont écartées de leur position active, caractérisée par le fait que chacune des deux butées (18) est portée respectivement par deux bras coudés symétriques (14) articulés chacun autour d'un axe (15) parallèle à la direction de roulement des objets (8) et disposé en dessous du plan des deux chemins de roulement (7), les moyens de commande (16) coopérant avec chacun des deux susdits bras (14) étant également disposés en dessous du plan des deux chemins de roulement (7).

2. Installation selon la revendication 1, caractérisée par le fait que des moyens de rappel (19) coopèrent avec chaque bras (14) pour ramener automatiquement le bras (14) dans une position correspondant à la position effacée de la butée (18), en cas de non-alimentation en énergie des moyens de commande (16).

3. Installation selon la revendication 2, caractérisée par le fait que les moyens de rappel sont constitués par un contrepoids (19) porté par une partie du bras (14) éloignée de son axe d'articulation (15).

4. Installation de manutention pour objets cylindriques longs (8), tels que de tuyaux, comportant au moins deux chemins de roulement (7) sur lesquels lesdits objets (8) roulent sous l'action de moyens convoyeurs (9, 10), et au moins un dispositif de positionnement (A) comportant deux butées mobiles (18) disposées l'une en face de l'autre de part et d'autre des deux chemins de roulement (7) et pouvant occuper, sous l'action de moyens de commande (16), soit une position active pour laquelle les deux butées (18) coopèrent respectivement avec les deux extrémités (8a, 8b) des objets (8) passant à leur niveau pour les positionner transversalement, soit une position effacée pour laquelle les deux butées (18) sont écartées de leur position active, caractérisée par le fait qu'il est prévu, au voisinage des deux chemins de roulement (7) et au niveau des deux butées mobiles (18) au moins deux patins de glissement (11) surélevés par rapport au plan des deux chemins de roulement (7) et sur lesquels les objets (8) se trouvent positionnés lorsqu'il passent au niveau des deux butées (18) et que lesdites butées (18) viennent coopérer respectivement avec leurs deux extrémités (8a, 8b) pour procéder à leur positionnement transversal, de telle sorte que, lors d'un déplacement transversal de l'objet (8) par rapport aux chemins de roulement (7), l'objet est supporté par les patins de glissement.

5. Installation selon la revendication 4, caractérisée par le fait que chaque patin de glissement (11) est muni d'une rampe d'accès avant et d'une rampe d'accès arrière (12).

**Patentansprüche**

1. Handhabungsvorrichtung für lange zylindrische Gegenstände (8), etwa Rohre, umfassend wenigstens zwei Rollbahnen (7), auf denen die Gegenstände (8) unter der Wirkung von Fördermitteln (9, 10) rollen, und wenigstens eine Positioniereinrichtung (A), die zwei bewegliche Anschläge (18) aufweist, die einander zugewandt beiderseits der beiden Rollbahnen (7) angeordnet sind und unter der Einwirkung von Stellmitteln (16) entweder eine aktive Stellung, in der die beiden Anschläge (18) jeweils mit den beiden Enden (8a, 8b) der Gegenstände (8) zusammenarbeiten, die sich in ihrer Höhe vorbeibewegen, um sie in Querrichtung zu positionieren, oder eine zurückgezogene Stellung einnehmen können, in der die beiden Anschläge (18) aus ihrer aktiven Stellung entfernt sind, dadurch gekennzeichnet, dass jeder der beiden Anschläge (18) jeweils durch zwei symmetrische Winkelarme (14) getragen ist, die jeweils um eine Achse (15) angelenkt sind, die parallel zur Rollrichtung der Gegenstände (8) ist und unterhalb der Ebene der beiden Rollbahnen (7) angeordnet ist, wobei die Stellmittel (16) mit jedem der beiden Hebel (14) zusammenwirken, wobei sie ebenfalls unter der Ebene der beiden Rollbahnen (7) angeordnet sind.

2. Vorrichtung nach Anspruch 1, dadurch gekennzeichnet, dass die Rückstellmittel (19) mit jedem Hebel (14) zusammenarbeiten, um in dem Fall, dass keine Energie in die Stellmittel (16) eingespeist wird, den Hebel (14) in eine Stellung entsprechend der zurückgezogenen Stellung des Anschlags (18) zurückzuführen.

3. Vorrichtung nach Anspruch 2, dadurch gekennzeichnet, dass die Rückstellmittel durch ein Gegengewicht (19) gebildet sind, das durch einen Teil des Hebels (14) getragen ist, der von seiner Anlenkachse (15) entfernt ist.

4. Handhabungsvorrichtung für lange zylindrische Gegenstände (8), etwa Rohre, umfassend wenigstens zwei Rollbahnen (7), auf denen die Gegenstände (8) unter der Einwirkung von Fördermitteln (9, 10) rollen, und wenigstens eine Positioniereinrichtung (A), die zwei bewegliche Anschläge (18) aufweist, die einander zugewandt beiderseits der Rollbahnen (7) angeordnet sind, und unter der Einwirkung von Stellmitteln (16) entweder eine aktive Stellung, in der die beiden Anschläge (18) jeweils mit den beiden Enden (8a, 8b) der sich in ihrer Höhe vorbeibewegenden Gegenstände (8) zusammenarbeiten, um sie in Querrichtung zu positionieren, oder eine zurückgezogene Stellung einnehmen können, in der die beiden Anschläge (18) aus ihrer aktiven Stellung entfernt sind, dadurch gekennzeichnet, dass in Nähe der beiden Rollbahnen (7) und der Höhe der beiden beweglichen Anschläge (18) wenigstens zwei Gleitschuhe (11) vorgesehen sind, die gegenüber der Ebene der beiden Rollbahnen (7) vorstehen und auf denen sich die Gegenstände (18) positioniert befinden, wenn sie sich in der Höhe der beiden Anschläge (18) vorbeibewegen, und dass die Anschläge (18) jeweils mit ihren beiden Enden (8a, 8b) zusammenarbeiten, um ihre Querpositionierung vorzunehmen derart, dass während einer Querverschiebung des Gegenstandes (8) gegenüber den Rollbahnen (7) der Gegenstand von den Gleitschuhen getragen wird.

5. Vorrichtung nach Anspruch 4, dadurch gekennzeichnet, dass jeder Gleitschuh (11) mit einer vorderen Auflauframpe und einer hinteren Auflauframpe (12) versehen ist.

**Claims**

1. Installation for handling long cylindrical objects (8), such as pipes, comprising at least two tracks (7) on which the said objects (8) roll under the action of conveying means (9, 10) and at least one positioning device (A) comprising two moveable stops (18) arranged one facing the other on either side of the two tracks (7) and able to occupy, under the action of control means (16), either an active position in which the two stops (18) co-operate respectively with the two ends (8a, 8b) of the objects (8) passing at their level in order to position them transversely, or a retracted position in which the two stops (18) are withdrawn from their active position, characterised by the fact that each of the two stops (18) is carried respectively by two symmetrical elbowed arms (14), each pivoted about an axis (15) parallel to the rolling direction of the objects (18) and disposed below the plane of the two tracks (7), the control means (16) co-operating with each of the two said arms (14) also being disposed below the plane of the two tracks (7).

2. Installation according to Claim 1, characterised by the fact that return means (19) co-operate with each arm (14) in order to restore the arm (14) automatically into a position corresponding to the withdrawn position of the stop (18), in the case of a power failure to the control means (16).

3. Installation according to Claim 2, characterised by the fact that the return means are constituted by a counter weight (19) carried by part of the arm (14) remote from its pivot axis (15).

4. Installation for handling cylindrical objects (8), such as pipes, comprising at least two tracks (7) on which the said objects (8) roll under the action of conveying means (9, 10) and at least one positioning device (A) comprising two movable stops (18) disposed one facing the other on either side of two tracks (7) and able to occupy, under the action of control means (16), either an active position in which the two stops (18) co-operate respectively with the two ends (8a, 8b) of the objects (8) passing at their level in order to position them transversely, or a withdrawn position in which the two stops (18) are withdrawn from their active position, characterised by the fact that there are provided, in the vicinity of the two tracks (7) and at the level of the two moveable stops (18), at least two slide runners (11), elevated with respect to the plane of the two tracks (7) and on which the objects (8) are positioned when they pass at the level of the two stops (18) and that the said stops (18) co-operate respectively with their two ends (8a, 8b) in order to proceed with their transverse positioning so that, at the time of a transverse displacement of the object (8) with respect to the tracks (7), the object is supported by the slide runners.

5. Installation according to Claim 4, characterised by the fact that each slide runner (11) is provided with a front access ramp and a rear access ramp (12).

# FIG.1.

0 175 093

FIG. 2.

0 175 093

# FIG.3.

$F_1$

20  8  8  8  7  8  20  8  8

11  12  12  11  12  12  11

0 175 093